# EUROPEAN PATENT APPLICATION

(11) **EP 4 369 136 A1**
(43) Date of publication of application: **15.05.2024**
(21) Application number: 23209222.1
(22) Date of filing: 10.11.2023
(51) Int. Cl.: G05D 1/225, G05D 1/243, G05D 1/249, G05D 1/698, G05D 101/15, G05D 101/00, G05D 105/28, G05D 107/70, G05D 111/10, G06V 10/00, G05D 1/2285, G05D 109/10

(54) **SYSTEMS AND METHODS FOR BYSTANDER POSE ESTIMATION FOR INDUSTRIAL VEHICLES**

(30) Priority: 11.11.2022 US 202263424748 P
(71) Applicant: The Raymond Corporation, Greene, NY 13778 (US)
(72) Inventor: D'ACCOLTI, Anthony V., Manlius, NY 13104 (US); MURLI, Sathvik, Green Brook, NJ 08812 (US)
(74) Representative: Zacco Sweden AB

(57) **Abstract**

Systems and methods for enhanced MHV operation using an automation processing system for bystander detection and bystander pose estimation to control operation of the MHV.

## Description

### CROSS-REFERENCES TO RELATED APPLICATIONS

This application claims the benefit of and priority to U.S. Provisional Application No. 63/424,748, filed on November 11, 2022, the entire contents of which are herein incorporated by reference for all purposes.

### BACKGROUND

Certain material handling vehicles (MHVs), for example automated MHVs, may be equipped with a variety of sensors. These sensors may be used for, among other purposes, determining the position and orientation of a MHV within a given environment. In some examples, the MHV may be able to navigate autonomously within the given environment, for example by moving around an area such as a warehouse or other facility. The MHV may use one or more sensors, for example coupled to or proximate to the MHV, or remote from the MHV, for performing autonomous navigation. Sensor data processing (such as image processing, processing of 3D data, and the like), wireless communication, and/or obstacle detection may be required for the MHV to accurately navigate autonomously.

In addition, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

### BRIEF SUMMARY

The present disclosure describes novel autonomous MHV control systems and methods.

In some embodiments, a bystander control system for a material handling vehicle (MHV) having a sensor and a vehicle control system (VCS) may comprise an automation processing system (APS) having a processor and a memory, the APS coupled with the sensor and VCS and having a machine learning control program stored in the memory, wherein the APS is configured to receive sensor data based on the sensor output, process the sensor data, using the machine learning control program, wherein the machine learning control program comprises a trained machine learning model, generate, based on the processed sensor data, an output comprising an indication of a control action for the MHV, and send the generated output to the VCS.

In some embodiments, the machine learning control program comprises a bystander detection machine learning model.

In some embodiment, the machine learning control program comprises a bystander pose estimation machine learning model.

In some embodiments, the machine learning control program comprises a bystander detection machine learning model and a bystander pose estimation machine learning model, wherein processing the sensor data comprises: determining, using the bystander detection machine learning model, whether a bystander is in proximity of the MHV, and determining, using the bystander pose estimation machine learning model, the pose of the bystander, and the APS is configured to generate the output based on the determined bystander pose.

In some embodiments, the APS is configured to send an indication of the determined bystander pose to a second MHV.

In some embodiments, the sensor comprises at least one sensor of a first type and at least one sensor of a second type.

In some embodiments, the MHV operates in an environment and the sensor data comprises a comparison of the sensor output and a predetermined map of the environment.

In some embodiments, a method for bystander control for a material handling vehicle (MHV) may comprise: generating, by a sensor of the MHV, sensor data indicative of the environment proximate to the MHV, receiving, by an automation processing system (APS) of the MHV, the sensor data, the APS having a processor and a memory, processing the sensor data, by a machine learning control program stored in the memory, wherein the machine learning control program comprises a trained machine learning model, generating, based on the processed sensor data, an output comprising an indication of a control action for the MHV; and sending the generated output to the VCS.

In some embodiments, the machine learning control program comprises a bystander detection machine learning model.

In some embodiment, the machine learning control program comprises a bystander pose estimation machine learning model.

In some embodiments, the machine learning control program comprises a bystander detection machine learning model and a bystander pose estimation machine learning model, wherein processing the sensor data comprises determining, using the bystander detection machine learning model, whether a bystander is in proximity of the MHV, and determining, using the bystander pose estimation machine learning model, the pose of the bystander, and generating the output is based on the determined bystander pose.

In some embodiments, the method for bystander control for a MHV may further comprise sending an indication of the determined bystander pose to a second MHV.

In some embodiments, the sensor comprises at least one sensor of a first type and at least one sensor of a second type, and wherein generating sensor data indicative of the environment proximate to the MHV comprises generating a first sensor data based on the output of a first sensor of the first type and a second sensor data based on the output of a second sensor of the second type.

In some embodiments, generating the sensor data indicative of the environment proximate to the MHV comprises comparing an output of the sensor to a predetermined map of the environment.

The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

### BRIEF DESCRIPTION OF DRAWINGS

The invention will be better understood and features, aspects and advantages other than those set forth above will become apparent when consideration is given to the following detailed description thereof. Such detailed description makes reference to the following drawings.
Fig. 1 is a block diagram of an example system architecture including an example MHV and an automation processing system, according to various aspects of the present disclosure.
Fig. 2A is a simplified block diagram of example input and output of an automation processing system, according to various aspects of the present disclosure.
Fig. 2B is a simplified block diagram showing multiple example inputs and an output of an automation processing system, according to various aspects of the present disclosure.
Fig. 3 is a block diagram illustrating example components of an example automation processing system and a vehicle control system, according to various aspects of the present disclosure.
Fig. 4 is a flowchart illustrating an example process for detecting obstacles and controlling an MHV, according to various aspects of the present disclosure.
Fig. 5 is a top view of an MHV navigating an environment, according to various aspects of the present disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the various system and methods disclosed herein are suitable for other vehicles, such as automobiles, busses, trains, tractor-trailers, farm vehicles, factory vehicles, and the like.

Certain MHVs, for example automated MHVs, may be equipped with a variety of sensors, such as proximity sensors, cameras, radar, Light Detection and Ranging (LIDAR), sonar, and the like. In some embodiments, the sensors may (by sensor type and/or in combination with other sensor types) provide 360-degree coverage of the area surrounding the MHV. The sensors may be used for, among other purposes, determining the position and orientation of a MHV within a given environment, detecting obstacles within the environment, and autonomously navigating the environment. A computer coupled with the sensors may determine information about the environment based on the output of the various sensors, such as the presence of expected obstacles (e.g., known aisles and walls), unexpected obstacles (e.g., an obstacle in the path of the MHV), location and orientation of the MHV, and the like.

Systems and methods according to various aspects of the present disclosure may detect a bystander and/or a bystander pose and predict the bystander's behavior, movement, and the like, and may increase the number and complexity of decisions and control capabilities available to the MHV. The systems and methods may be termed bystander control system, and method for bystander control. Systems and methods according to various aspects of the present disclosure thus can increase the productivity of a MHV operating in an environment. According to various exemplary embodiments, an automated MHV (e.g., via an electronic controller coupled with the automated MHV) may determine whether a human (also referred to herein as a "bystander" or "pedestrian") is present in the general vicinity of the MHV (e.g., within a certain distance, within the field of view of the sensors of the MHV, or the like). In some embodiments, the MHV may determine a pose (e.g., bystander location, body position, hand signal, gesture, path of travel, or the like) of the bystander and control operation of the MHV accordingly. Controlling the operation of the MHV may comprise enacting limiting or other controlling behavior. For example, a bystander may preemptively stop a MHV by raising a hand signal or stop a MHV to retrieve something from the MHV and then provide a separate hand signal to allow the MHV to continue. In another example, the MHV may determine bystander pose and track the position of bystanders and provide relevant information to other MHVs in the environment to allow them to be aware of a bystander moving through the environment and to update their routes to avoid the expected path of the bystander, thereby reducing productivity delays.

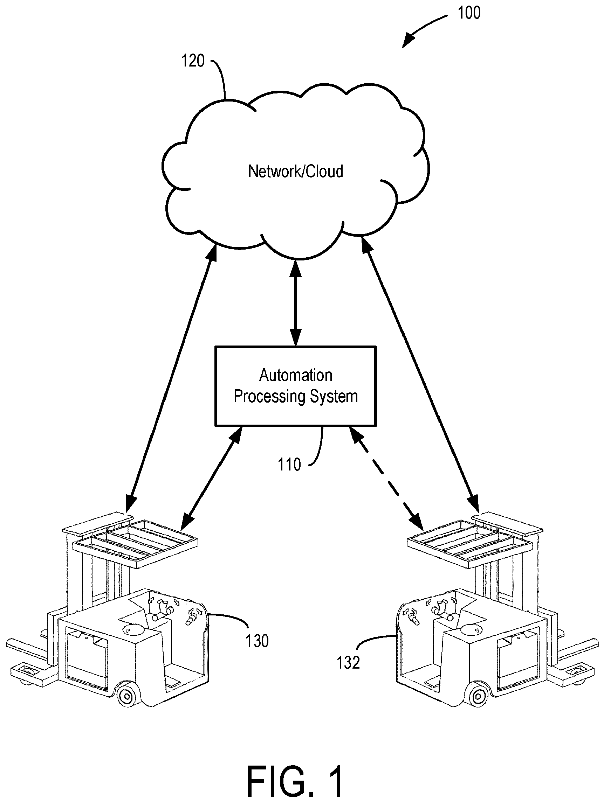

Systems and methods according to various aspects of the present disclosure may comprise a MHV operating based on determination of a bystander pose. Referring to Fig. 1, a system for MHV control 100 may comprise a MHV 130 in communication with an automation processing system (APS) 110. The APS 110 may determine bystander presence, pose, and provide control instructions to the MHV 130. In some embodiments, an individual MHV 130 may comprise the APS 110, for example integrated into the MHV 130 electronics/control system or otherwise physically located with the MHV 130. By including the APS 110 in the MHV 130, communication latency with other on-vehicle functionality may be reduced and/or connection quality and reliability may be improved. In other embodiments, however, the APS 110 may be located separate from the MHV, for example located at a fixed position within the environment, external to the environment (e.g., in a control room, cloud computing server, etc.), or the like. Such implementations may provide improved processing power. In some embodiments, the APS 110 may be located on a wall, shelving unit, ceiling, or the like. In some embodiments, the APS 110 may comprise a plurality of APSs, for example networked APSs.

In some embodiments, the APS 110 may be communicatively coupled with a network 120, through which it may be in communication with one or more other MHVs and/or other APSs (e.g., an APS of a separate MHV 132). In some embodiments, the MHV may be communicatively coupled to the network 120, through which it may be in communication with one or more other MHVs 132 and/or APSs (e.g., a standalone APS or an APS of a separate MHV 132).

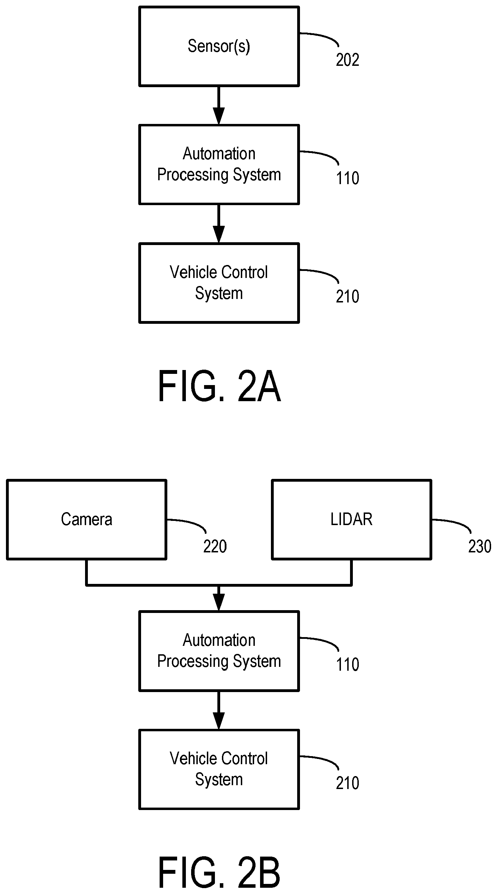

Referring to Figs. 2A and 2B, the system for MHV control 100 may further comprise one or more sensors 202. In some embodiments, the APS 110 may receive the output of the one or more sensors 202. The sensor 202 may comprise any suitable sensor for observing the environment and determining (whether alone or in combination with other sensors 202) pose information about a bystander. The sensor 202 may comprise any suitable sensor that can provide sufficient data points to identify the position and pose of obstacles. For example, the sensor 202 may comprise an image sensor, RGBD camera (RGB + Depth camera, e.g., using stereoscopic imaging, time-of-flight, etc.), sonar sensor, time-of-flight sensor, radar sensor, LIDAR sensor, or the like. In some embodiments, the sensor 202 may be physically located with the MHV 130, with the APS 110, or separate from the MHV 130 and APS 110. In some embodiments, the sensor 202 may be located on a wall, shelving unit, ceiling, or the like. In some embodiments, the system for MHV control 100 may comprise emitters for sensing, for example laser emitters for LIDAR, acoustic (e.g., ultrasonic) emitters for sonar, IR emitters for IR-wavelength imaging, and the like, which may be located at any suitable location (e.g., on the MHV 130 or otherwise within the environment).

Referring to Fig. 2A, in some embodiments the sensor 202 may comprise an image sensor, which may output image data based on the light received from the observed environment. In some embodiments, the sensor 202 may comprise LIDAR, which may output a three-dimensional (3D) point map representing the observed environment. Referring to Fig. 2B, in some embodiments the sensors 202 may comprise an image sensor in combination with a LIDAR sensor.

In some embodiments, the APS 110 may operate individually on the outputs of a plurality of sensors 202, for example separately determining bystander pose information from each sensor output. In some embodiments, the APS 110 may operate on a combination of the outputs of a plurality of sensors 202, for example by combining the output image data from a plurality of image sensors (e.g., to create a 180-degree view, 270-degree view, 360-degree view, etc.) prior to determining bystander pose information. In some embodiments, the APS 110 may operate on a combination of the output of a plurality of different sensor types, for example by combining depth data from a LIDAR sensor with image data from an image sensor.

In some embodiments, the MHV 130 may comprise a vehicle control system 210 (VCS, which may also be referred to as Vehicle Manager) which may facilitate operation of the MHV 130. The VCS 210 may receive control requests from devices that do not have direct access to control systems of the MHV 130 and may send appropriate signals to various systems of the MHV 130. For example, the VCS 210 may receive control requests from a horn button, throttle control, light switch, fork control, or the like, and may send appropriate signals to the various systems of the MVH 130 such as a speaker/horn device, drive unit, lights, fork actuators, or the like.

The APS 110, after operating on the received sensor 202 output, may send one or more control instructions (e.g., control signals, formatted data, requested action, etc.) to the VCS 210 to limit or otherwise control operation of the MHV 130. In some embodiments, the control instructions may not be finally acted upon by the MHV 130. In other words, the APS 110 may or may not have final control over operation of the MHV 130.

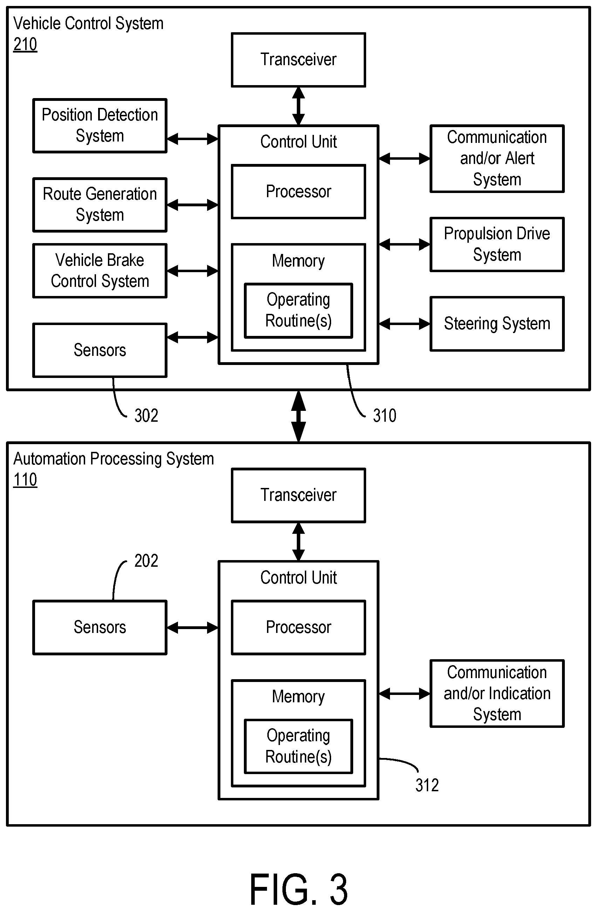

Referring to Fig. 3, the VCS 210 may comprise and/or be communicatively coupled with any combination of software, electronic components, and/or processing circuitry suitable for controlling operation of the MHV 130. In some embodiments, the VCS 210 may comprise a vehicle brake control system, a propulsion drive system, and a steering system configured to perform respective operations to control movement of the MHV 130. In some embodiments, the VCS 210 may comprise a position detection system and/or a route generation system to determine the position of the MHV 130 and/or a route for the MHV 130 to follow. In some embodiments, the VCS 210 may comprise, or may be otherwise configured to receive output of, sensors 302 which may be used by one or more of the various systems of the VCS 210. For example, one or more sensors 302 may be used by the position detection system, vehicle brake control system, route generation system, and so on. In some embodiments, the VCS 210 may comprise a communication and/or indication system configured to provide notification to various devices and/or bystanders of potential contact, for example. In some embodiments, the VCS 210 may comprise a transceiver, for example for wired or wireless communication to the communication network 120, the APS 110, other MHVs 132, other computer systems, or the like.

The VCS 210 may comprise a control unit 310 in communication with one or more of the various systems of the VCS 210. The control unit 310 may be configured to send and/or receive information (e.g., including instructions) to/from the various systems. The control unit 310 may comprise processing circuitry configured to execute operating routine(s) stored in a memory. The control unit 310 may comprise, for example, a processor, microcontroller, application-specific integrated circuit (ASIC), field-programmable gate array (FPGA), and the like, any other digital and/or analog components, as well as combinations of the foregoing, and may further comprise inputs and outputs for processing control instructions, control signals, drive signals, power signals, sensor signals, and the like. All such computing devices and environments are intended to fall within the meaning of the term "controller," "control unit," "processor," or "processing circuitry" as used herein unless a different meaning is explicitly provided or otherwise clear from the context. The term "control unit" is not limited to a single device with a single processor, but may encompass multiple devices (e.g., computers) linked in a system, devices with multiple processors, special purpose devices, devices with various peripherals and input and output devices, software acting as a computer or server, and combinations of the above. In some implementations, the control unit 310 may be configured to implement cloud processing, for example by invoking a remote processor.

Moreover, as used herein, the term "processor" may include one or more individual electronic processors, each of which may include one or more processing cores, and/or one or more programmable hardware elements. The processor may be or include any type of electronic processing device, including but not limited to central processing units (CPUs), graphics processing units (GPUs), ASICs, FPGAs, microcontrollers, digital signal processors (DSPs), or other devices capable of executing software instructions. When a device is referred to as "including a processor," one or all of the individual electronic processors may be external to the device (e.g., to implement cloud or distributed computing). In implementations where a device has multiple processors and/or multiple processing cores, individual operations described herein may be performed by any one or more of the microprocessors or processing cores, in series or parallel, in any combination.

As used herein, the term "memory" may be any storage medium, including a nonvolatile medium, e.g., a magnetic media or hard disk, optical storage, or flash memory; a volatile medium, such as system memory, e.g., random access memory (RAM) such as dynamic RAM (DRAM), synchronous dynamic RAM (SDRAM), static RAM (SRAM), extended data out (EDO) DRAM, extreme data rate dynamic (XDR) RAM, double data rate (DDR) SDRAM, etc.; on-chip memory; and/or an installation medium where appropriate, such as software media, e.g., a CD-ROM, or floppy disks, on which programs may be stored and/or data communications may be buffered. The term "memory" may also include other types of memory or combinations thereof. For the avoidance of doubt, cloud storage is contemplated in the definition of memory.

The APS 110 may be communicatively coupled with the VCS 210, for example using wired and/or wireless communication. The APS 110 may comprise any combination of software, electronic components, and/or processing circuitry suitable for providing control instructions (e.g., control signals) to various components of the MHV 130, for example to or through the VCS 210. In some embodiments, the APS 110 may comprise the same software, electronic components, and/or processing circuitry as the VCS 210. In some embodiments, the APS 110 may comprise sensors or may be otherwise configured to receive sensor output, such as from sensors 202. In some embodiments, the sensors used by the APS 110 and VCS 210 may comprise the same sensors. In some embodiments, the APS 110 may comprise a communication and/or indication system similar to the VCS 210 communication and/or indication system described above. In some embodiments, the APS 110 may comprise a transceiver, for example for wired or wireless communication to the communication network 120, the VCS 210, other MHVs 132, other computer systems, or the like.

The APS 110 may comprise a control unit 312 in communication with one or more of the various systems of the APS 110. The control unit 312 may be configured to send and/or receive information (e.g., including instructions) to/from the various systems. Whether integrated with, or separate from another computing device (e.g., the control unit 310 of the VCS 210), the APS 110 control unit 312 may comprise processing circuitry configured to execute operating routine(s) stored in a memory. In some embodiments, the APS 110 control unit 312 and VCS 210 control unit 310 comprise the same control unit.

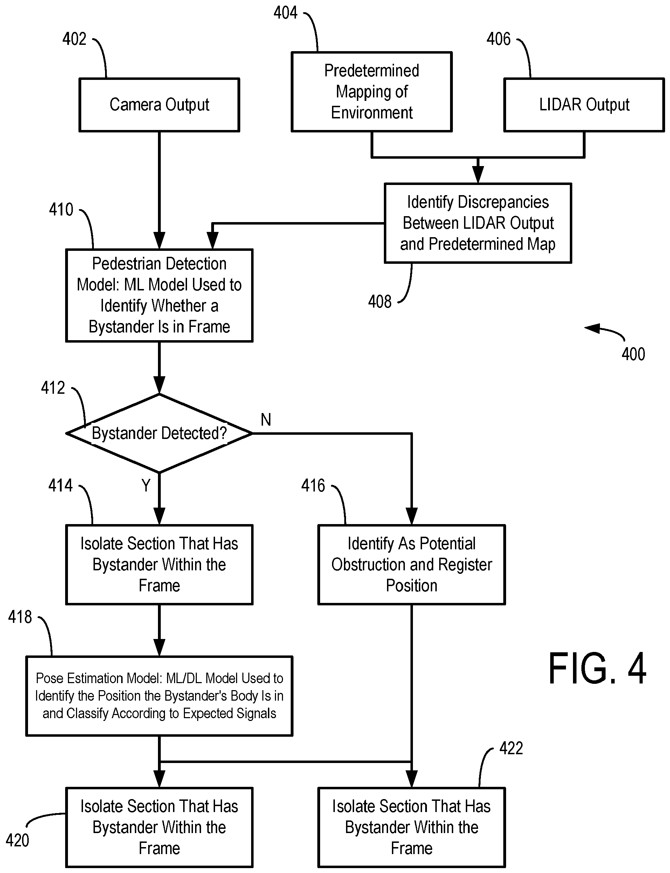

Referring to Fig. 4, a method for MHV control 400 may comprise the APS 110 receiving information from one or more sensors 202 and determining whether to send a control instruction to the MHV. In some embodiments, the method for MHV control 400 may be implemented in the APS 110 control unit 312, for example, as operating routines stored in memory (e.g., as software). In some embodiments, the method for MHV control 400 may be continuously operating when the MHV 130 is turned on or otherwise in operation.

In some embodiments, the APS 110 may receive camera output at step 402, for example in the form of image data. In some embodiments, the APS 110 may receive LIDAR sensor output at step 406 or any other suitable 3D sensing information, such as radar sensor output, sonar sensor output, depth image sensor output, or the like. In some embodiments, the APS 110 may receive or otherwise have a predetermined map of the environment at step 404 and may compare the predetermined map with the received sensing information to identify discrepancies at step 408 between the actual sensor output and the expected output based on the predetermined mapping.

In some embodiments, the method for MHV control 400 may then determine whether a bystander is detected at step 412, based on the received sensor output from step 402 and/or identified discrepancies based on the sensor output from step 408. In some embodiments, the APS 110 may use a bystander detection machine learning (ML) model at step 410, for example based on a machine learning algorithm (e.g., such as a deep learning algorithm), to perform this determination. As used herein, a ML algorithm may comprise a procedure run on a training data set to create a ML model, and a ML model is configured to receive new input data and generate an estimation, prediction, classification, or the like for the new input data. The ML model may be pre-trained, and/or may be trained on potential bystanders (e.g., employees of the physical location where the system is to be implemented). Additional description is provided further below. In some embodiment, the bystander detection ML model may comprise a neural net trained to find where bystanders are within the surroundings of the MHV. In some embodiments, bystander detection may comprise machine/computer vision techniques.

In some embodiments, the bystander detection ML model may operate at step 410 in the APS 110 control unit 312. The bystander detection ML model may be stored in the memory of the APS 110 control unit 312. The control unit 312 processing circuitry may execute operating routines including the bystander detection ML model and may generate an output based on one or more of the received sensor data from steps 402 or 408. In some embodiments, the bystander detection ML model may comprise any suitable ML model for estimating whether a bystander is in view of the relevant sensors of the MHV 130. In some embodiments, the bystander detection ML model may comprise any suitable ML model for estimating whether a bystander is in a certain proximity of the MHV 130, for example in embodiments having the sensors 202 at a fixed location within the environment or on the MHV.

Based on the output of the bystander detection ML model at step 410, the method for MHV control 400 then determines whether a bystander is detected at step 412. In some embodiments, the bystander detection determination at step 412 may be based solely on the output of the bystander detection ML model from step 410, and in other embodiments it may include other factors in the determination. In some embodiments, if a bystander is not detected, then the APS 110 may determine whether a potential obstacle has been identified at step 416. If an obstacle is identified, then the APS 110 may send relevant information to the MHV 130 and/or other MHVs 132 at step 420, such as control instruction(s), location of the obstacle, size of the obstacle, and the like. In some embodiments, if a bystander is detected, the method for MHV control 400 may then isolate, at step 414, the portion of the sensor 202 output having information relating to the bystander. For example, image data may be cropped to focus on the portion of the image having a bystander.

In some embodiments, the method for MHV control 400 may then determine the pose of the detected bystander at step 418. In some embodiments, the determination at step 418 may be based on the received sensor data from steps 402 and/or 408, the output of the isolation step 414, additional sensor output, any combination of the foregoing, and the like. In some embodiments, the APS 110 may use a pose estimation machine learning (ML) model at step 418, for example based on a machine learning algorithm (e.g., such as a deep learning algorithm), to perform this determination. The bystander pose estimation ML model may comprise any suitable ML model for identifying or otherwise estimating specific bystander poses such as hand or arm raised, hand signals, foot position, walking or standing, moving or stationary, movement direction, facing direction, and the like. In some embodiments, the bystander pose estimation ML model may comprise a neural net trained for pose estimation, such as identifying the location of a bystander's legs and arms with respect to the rest of their body to identify if the bystander is moving, raising a predetermined hand signal, or the like. In some embodiments, bystander poser determination may comprise machine/computer vision techniques.

As described above with respect to the bystander detection ML model, the pose estimation ML model may operate in the APS 110 control unit 312 in some embodiments. In some embodiments, the bystander detection ML model and the pose estimation model may comprise the same ML model. For example, the ML algorithm may be configured to train a ML model to both detect a bystander and the pose of the bystander.

In some embodiments, once the bystander pose has been identified at step 418 and the APS 110 has an understanding of the characteristics of the bystander (e.g., direction of travel, whether a recognized hand signal has been given, etc.) the APS 110 may decide whether to send a control instruction to the MHV. For example, a bystander may signal for the MHV to stop along the bystander's travel path until the bystander has completed travelling through crosswalks, in which case the APS 110 may send a control instruction at step 420 to the VCS 210 to stop (e.g., for a period of time, until a follow-up control instruction is sent, etc.). In another example, a bystander may signal the MHV to continue on its route, but a control signal may not need to be sent to the VCS 210 if the MHV is currently stationary and without a route.

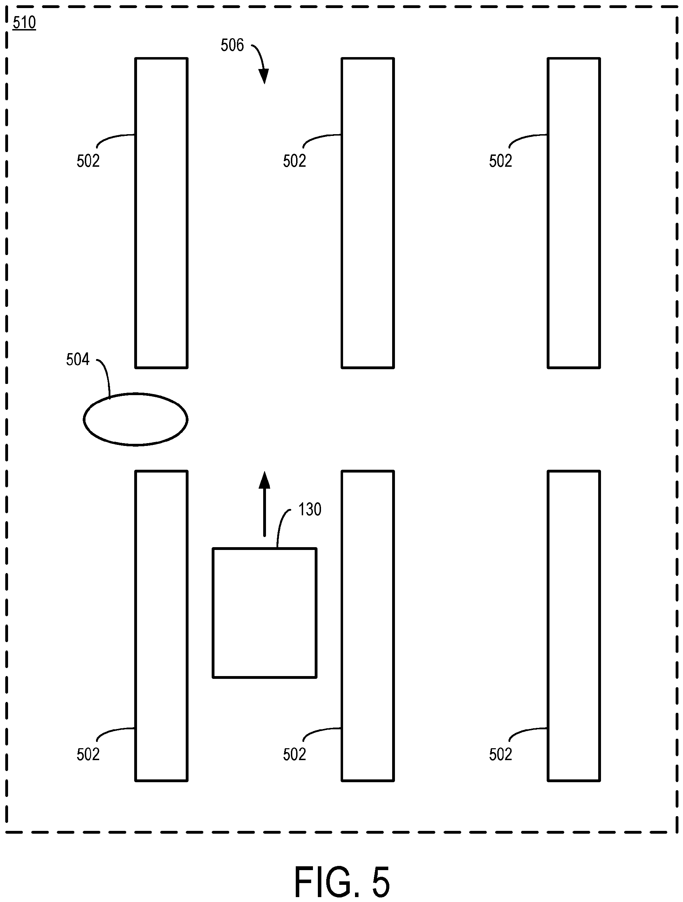

In some embodiments, based on the bystander pose determined in step 418, and possibly the determination of whether to send a control instruction as described above, the method for MHV control 400 (e.g., the APS 110) may then send one or more control instructions to the MHV 130, for example to the VCS 210. For example, referring briefly to Fig. 5, a bystander 504 may be able to preemptively stop the MHV 130 moving in an aisle 506 (e.g., between shelving units 502) by raising a hand signal, stop the MHV 130 to retrieve something they need and then may use a separate hand signal to send the MHV 130 on its way, or instruct the MHV 130 to retrieve an object in the area (e.g., a nearby pallet) using yet another hand signal. Based on the determined bystander pose at step 418, the APS 110 may determine what control instruction(s) to send to the VCS 210. If a bystander presents a hand signal which is determined at step 418 to indicate the MHV 130 to stop, the APS 110 may send a control instruction to the VCS 210 to stop. If a bystander presents a hand signal which is determined at step 418 (see Fig. 4) to indicate the MHV 130 to continue on its way, the APS 110 may send a control instruction to the VCS 210 to resume travel of the MHV 130. If the APS 110 determines that the bystander is intending to enter the path of the MHV (with or without the bystander signaling such intention), the APS 110 may send control instructions to the VCS 210 to stop, to determine an updated route, and to continue moving (e.g., based on the updated route) once it is safe to do so. The VCS 210 may receive the control instruction(s) and may act upon it, for example by controlling the propulsion drive system, vehicle brake control system, route generation system, and the like. According to the systems and methods described herein, a bystander may enact limiting/controlling behavior through a pose, such as hand signals, movement, or other gestures.

In some embodiments, based on the bystander pose determined in step 418, and possibly the determination of whether to send a control instruction as described above, the method for MHV control 400 (e.g., the APS 110) may send information at step 422 to other MHVs 132. For example, in some embodiments, APS 110 (e.g., using the bystander pose ML model) may be configured to track the position of bystanders moving through the environment (for example facility 510 in Fig. 5). The APS 110 may communicate (e.g., via network/cloud 120) this information to the MHV 130 and/or other MHVs 132 in the environment, for example including control instruction(s). The various MHVs may, using the VCS 210 route generation system for example, update their routes to avoid the expected path of the bystander(s), thereby reducing productivity delays. In some embodiments, the MHV 130 may comprise lights and/or other indicators to indicate travel characteristics of the MHV to bystanders.

The ML algorithm(s) for the ML models discussed above may be implemented on any suitable computing system. In some embodiments, the APS 110 control unit 312 and/or VCS 210 control unit 310 may be configured to perform the machine learning algorithm. In some embodiments, a separate server (e.g., in the cloud 120) may be configured to perform the ML algorithm. The ML algorithm may be configured to construct a ML model based on the training data set. The training data set may comprise example inputs and their actual outputs (e.g., classification). The generated ML model can map the inputs to the outputs based on the provided training set. The ML model may be updated over time, for example as the training data set becomes larger, is improved, or is otherwise updated. In some embodiments, the APS 110 may be provided with the updated ML model(s) from time to time.

The ML algorithm may be configured to perform machine learning using various methods, such as decision tree learning, associates rule learning, artificial neural networks, recurrent artificial neural networks, long short term memory neural networks, inductive logic programming, support vector machines, clustering, Bayesian networks, reinforcement learning, representation learning, similarity and metric learning, sparse dictionary learning, genetic algorithms, k-nearest neighbor (KNN), among others.

As described above, the ML algorithm is configured to perform a particular task, for example training a model to identify whether a bystander is present or training a model to identify or otherwise estimate specific bystander poses, such as hand or arm raised, hand signals, foot position, walking or standing, facing direction, and the like. The task for which the ML model is trained may vary based on, for example, the type of MHV, the type of sensor output available to the ML model, availability of processed sensor output to the ML model (e.g., comparison sensed vs. known environment), the environment in which the MHV 130 operates, the location of the relevant sensors on the MHV 130 or otherwise in the environment, and so on.

Systems and methods according to various aspects of the present disclosure provide additional control functionality to bystanders to stop trucks preemptively before the bystander and/or the MHV enters an area, such as an aisle. Systems and methods according to various aspects of the present disclosure also provide capability for MHVs to make calculated decisions (e.g., routing) based on bystander position and movement within the environment. Further, the additional information provided regarding bystander position and pose can facilitate MHVs determining larger stop fields if they believe a bystander is or will be in the surrounding area. Estimating bystander pose allows the MHV to determine if the bystander is, for example, just walking along side an aisle or is actually going to enter the aisle and obstruct the MHV. Accordingly, expanded decisions may be made based on the additional data provided to the MHV 130.

In addition, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, embodiments have been described in a way which enables a clear and concise specification to be written, but it is intended and will be appreciated that embodiments may be variously combined or separated without parting from the invention. For example, it will be appreciated that all preferred features described herein are applicable to all aspects of the disclosed technology described herein.

Thus, while the disclosed technology has been described in connection with particular embodiments and examples, the disclosed technology is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the disclosed technology are set forth in the following claims.

## Claims

1. A bystander control system (100) for a material handling vehicle (MHV; 130) having a sensor (202) and a vehicle control system (VCS; 210), the bystander control system comprising:
an automation processing system (APS; 110) having a processor and a memory, the APS (110) coupled with the sensor and the VCS (210) and having a machine learning control program stored in the memory, wherein the APS is configured to:
receive sensor data based on the sensor output;
process the sensor data, using the machine learning control program, wherein the machine learning control program comprises a trained machine learning model;
generate, based on the processed sensor data, an output comprising an indication of a control action for the MHV (130); and
send the generated output to the VCS (210).

2. The bystander control system (100) of claim 1, wherein the machine learning control program comprises a bystander detection machine learning model.

3. The bystander control system (100) of claim 1 or 2, wherein the machine learning control program comprises a bystander pose estimation machine learning model.

4. The bystander control system (100) of claim 1, 2 or 3, wherein the machine learning control program comprises a bystander detection machine learning model and a bystander pose estimation machine learning model, wherein:
processing the sensor data comprises:
determining, using the bystander detection machine learning model, whether a bystander is in proximity of the MHV (130); and
determining, using the bystander pose estimation machine learning model, the pose of the bystander; and
the APS (110) is configured to generate the output based on the determined bystander pose.

5. The bystander control system of claim 4, wherein the APS (110) is configured to send an indication of the determined bystander pose to a second MHV (132).

6. The bystander control system any of the claims above, wherein the sensor (202) comprises at least one sensor of a first type and at least one sensor of a second type.

7. The bystander control system any of the claims above, wherein the MHV (130) operates in an environment and the sensor data comprises a comparison of the sensor output and a predetermined map of the environment.

8. A method for bystander control (400) for a material handling vehicle (MHV; 130)) comprising:
generating, by a sensor (202) of the MHV (130), sensor data indicative of the environment proximate to the MHV;
receiving, by an automation processing system (APS; 110) of the MHV (130), the sensor data, the APS (110) having a processor and a memory;
processing the sensor data, by a machine learning control program, wherein the machine learning control program comprises a trained machine learning model;
generating, based on the processed sensor data, an output comprising an indication of a control action for the MHV (130); and
sending the generated output to a vehicle control system (VCS; 210).

9. The method for bystander control of claim 8, wherein the machine learning control program comprises a bystander detection machine learning model.

10. The method for bystander control of claim 8 or 9, wherein the machine learning control program comprises a bystander pose estimation machine learning model.

11. The method for bystander control of any of the claims 8 - 10, wherein the machine learning control program comprises a bystander detection machine learning model and a bystander pose estimation machine learning model, wherein:
processing the sensor data comprises:
determining, using the bystander detection machine learning model, whether a bystander is in proximity of the MHV (130); and
determining, using the bystander pose estimation machine learning model, the pose of the bystander; and
generating the output is based on the determined bystander pose.

12. The method for bystander control of claim 11, further comprising sending an indication of the determined bystander pose to a second MHV (132).

13. The method for bystander control of any of the claims 8 - 12, wherein the sensor (202) comprises a first sensor of a first type and a second sensor of a second type, and wherein generating sensor data indicative of the environment proximate to the MHV (130) comprises generating a first sensor data based on the output of the first sensor and a second sensor data based on the output of the second sensor.

14. The method for bystander control of any of the claims 8- 13, wherein generating the sensor data indicative of the environment proximate to the MHV (130) comprises comparing an output of the sensor (202) to a predetermined map of the environment.

15. The method for bystander control of any of the claims 8 - 14, wherein the machine learning control program is stored in the memory.
